# Europäisches Patentamt
# European Patent Office
# Office européen des brevets

(19)

(11) Veröffentlichungsnummer : **0 085 795**
**B1**

(12)

# EUROPÄISCHE PATENTSCHRIFT

(45) Veröffentlichungstag der Patentschrift :
04.03.87

(21) Anmeldenummer : 82201636.6

(22) Anmeldetag : 20.12.82

(51) Int. Cl.⁴ : **A 61 C 17/024**, A 61 H 13/00,
F 04 B 21/04

(54) Vorrichtung zum Pflegen und Reinigen der Zähne und des Zahnfleisches.

(30) Priorität : 20.01.82 DE 3201491

(43) Veröffentlichungstag der Anmeldung :
17.08.83 Patentblatt 83/33

(45) Bekanntmachung des Hinweises auf die Patenterteilung : 04.03.87 Patentblatt 87/10

(84) Benannte Vertragsstaaten :
AT CH FR GB IT LI NL SE

(56) Entgegenhaltungen :
EP-A- 0 029 636
CH-A- 198 487
DE-A- 2 916 215
DE-A- 2 926 309
DE-B- 2 058 728
DE-C- 828 829
FR-A- 2 270 459
GB-A- 369 661
GB-A- 1 306 165
GB-A- 2 071 498
US-A- 1 846 596
US-A- 2 733 713
US-A- 3 227 158
US-A- 3 393 673

(73) Patentinhaber : Braun Aktiengesellschaft
Rüsselsheimer Strasse 22
D-6000 Frankfurt/Main (DE)

(72) Erfinder : Lagerbauer, Norbert
Ährenstrasse 8
D-6000 Frankfurt/Main (DE)
Erfinder : Schreiber, Friedrich
Homburger Landstrasse 765
D-6000 Frankfurt/Main 56 (DE)
Erfinder : Oppermann, Günter
Kirchbornstrasse 37
D-6057 Dietzenbach (DE)
Erfinder : Hartwein, Peter
Frankfurter Strasse 14 A
D-6240 Königstein (DE)

(74) Vertreter : Einsele, Rolf
Braun Aktiengesellschaft Postfach 1120 Frankfurter
Strasse 145
D-6242 Kronberg Taunus (DE)

EP 0 085 795 B1

## Beschreibung

Die Erfindung betrifft eine Vorrichtung gemäß der Gattung des Hauptanspruchs.

Eine derartige Vorrichtung ist bereits aus der GB-A-20 71 498 bekannt. Obwohl sich derartige Vorrichtungen im praktischen Einsatz durchaus als brauchbar erwiesen haben, vermißt der Benutzer einen gewissen Bedienungskomfort, insbesondere eine Einstellbarkeit des pulsierenden Wasserstrahls unter Beibehaltung der einzelnen Pulsationen. Darüber hinaus haben sich die Pumpenaggregate vorbekannter Vorrichtungen als störanfällig oder recht teuer in der Herstellung erwiesen.

Des weiteren ist aus der CH-A-198 487 ein Pumpenaggregat für Spritzen zur Schädlingsbekämpfung bekannt, bei dem ein vorderer und ein hinterer Geradführungszylinder mit zwei zugehörigen Kolbenabschnitten vorgesehen sind, die den gleichen Durchmesser aufweisen. Insbesondere übergreift der vordere Geradführungsabschnitt die Kolbenpumpe, um die Baulänge des Pumpenaggregats zu verkürzen. Die Unterteilung der Geradführungsteile mit einer eingelagerten Dichtung stellt ein montagetechnisches Problem dar, so daß der Gegenstand der CH-A-198 487 nicht für die moderne Massenfertigung geeignet ist. Darüber hinaus ist eine derartige Pumpe aufgrund der Alterung und des Abriebs der Dichtung zwischen den Geradführungsteilen recht wartungsintensiv und nicht für den Einsatz bei Vorrichtungen zum Pflegen und Reinigen der Zähne und des Zahnfleisches geeignet.

Der vorliegenden Erfindung liegt daher die Aufgabe zugrunde, eine Vorrichtung zur Pflege und Reinigung der Zähne derart weiterzubilden, daß ein hoher Bedienungskomfort gewährleistet ist, der aus der Spritzdüse austretende, pulsierende Wasserstrahl in weiten Grenzen regelbar und die geförderte Flüssigkeitsmenge pro Pumpenhub immer gleich groß ist, wobei während der Regelung die einzelnen Pulsationen voll erhalten bleiben. Darüber hinaus soll die Vorrichtung den Anforderungen moderner Massenfertigung Genüge tun, d. h., insbesondere kostengünstig herstellbar sein und weitestgehende Wartungsfreiheit gewährleisten.

Diese Aufgabe wird durch eine Vorrichtung zum Pflegen und Reinigen der Zähne und des Zahnfleisches mit den Merkmalen des Hauptanspruchs gelöst.

Weitere vorteilhafte Ausgestaltungen der Erfindung sind in den Unteransprüchen angegeben.

Die Erfindung läßt die verschiedensten Ausführungsmöglichkeiten zu ; eine davon ist in der anhängenden Zeichnung wiedergegeben und zwar zeigen :

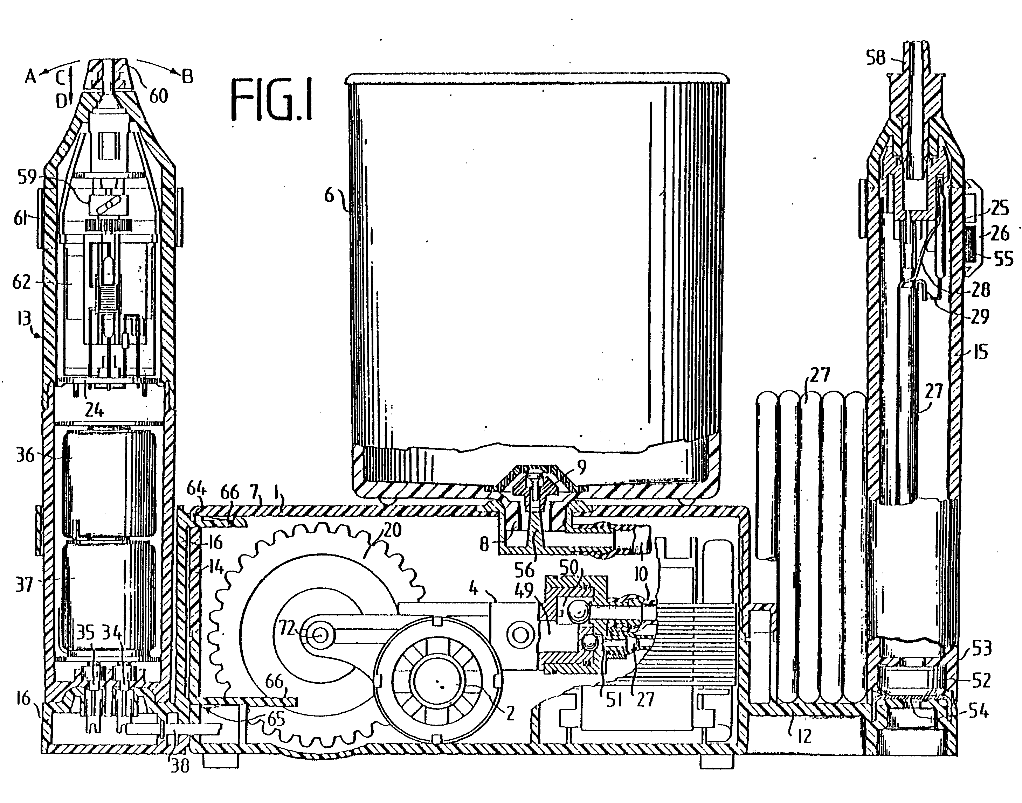

Figur 1 den Schnitt durch die Vorrichtung mit elektrischer Zahnbürste, Pumpenaggregat, Flüssigkeitsbehälter und Spritzdüse mit Handstück, in der Seitenansicht, wobei der Bürstenkörper mit Bürstenschaft und die Spritzdüse nur teilweise dargestellt sind ;

Figur 2 den Schnitt durch die Vorrichtung gemäß Figur 1 in der Draufsicht ;

Figur 3 den Kolben des Pumpenaggregats, teilweise im Schnitt, in stark vergrößerter Darstellung und

Figur 4 das Blockschaltbild des Stromlaufplans der Vorrichtung nach Figuren 1 und 2.

Die Vorrichtung zum Pflegen und Reinigen der Zähne und des Zahnfleisches besteht aus einem etwa quaderförmigen Gehäuse 1, in dem im Wesentlichen ein Elektromotor 2, ein Transformator 3, ein elektrisches Pumpenaggregat 4 und eine Leiterplatte 5 untergebracht sind. Außerdem ist ein Flüssigkeitsbehälter 6 auf der Oberseite 7 des Gehäuses 1 angeordnet, der über ein Kupplungsteil 8 mit Rückschlagventil 9 und einer Schlauchleitung 10 mit dem Pumpenaggregat 4 verbunden ist. Weiterhin ist ein an der Seitenwand 11 des Gehäuses 1 angeordneter Haltearm 12 für die Halterung des Handstücks 15 einer Spritzdüse 58 vorgesehen und schließlich ist an der Seitenwand 14 des Gehäuses 1 ein Adapter 16 angebracht, der dem Anschluß einer elektrischen Zahnbürste 13 dient.

Das Pumpenaggregat 4 weist einen Kolben 17 auf, der vom Pleuel 18 bewegt wird, der seinerseits auf dem Kurbelzapfen 19 des Zahnrads 20 gelagert ist. Das Zahnrad 20 steht mit dem Ritzel 21 des Elektromotors 2 im Eingriff.

Der Elektromotor 2 ist über die Leitungen 22, 23 mit der Leiterplatte 5 verbunden, die mit einem elektronisch arbeitenden Regelteil bestückt ist, über den der Motor 2 mit Strom versorgt wird und zwar in Abhängigkeit der Stellung des Schaltrings 26 des Schalters 25, der über die in die Schlauchleitung 27 integrierten Leitungen 28, 29 mit der Leiterplatte 5 verbunden ist und der Position des Stellglieds 30 das mit dem auf der Leiterplatte angeordneten Potentiometer 31 zusammenwirkt.

Der an der Seitenwand 14 befestigte Adapter 16 für die Halterung der elektrischen Zahnbürste 13 wird über die Leitungen 32, 33 und über die Leiterplatte 38 von der Leiterplatte 5 her mit Strom versorgt. Der Adapter 16 weist Kontakt-Stifte 34, 35 auf, über die der elektrische Strom zur Schaltplatine 24 und zu den Batterien 36, 37 fließt.

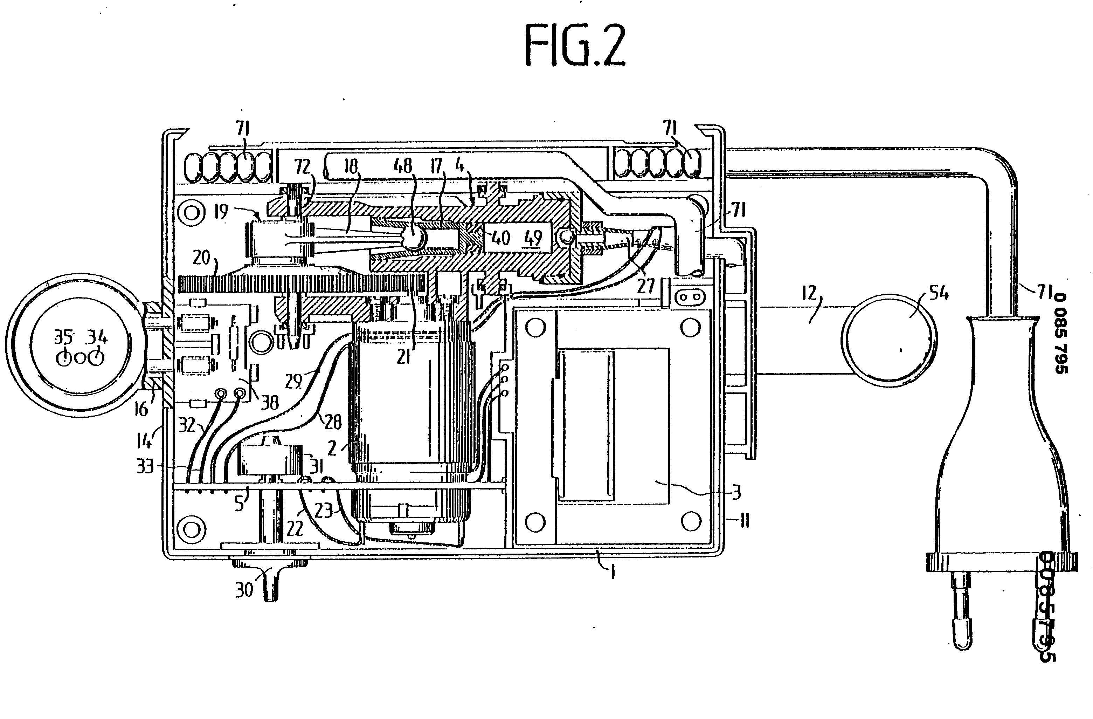

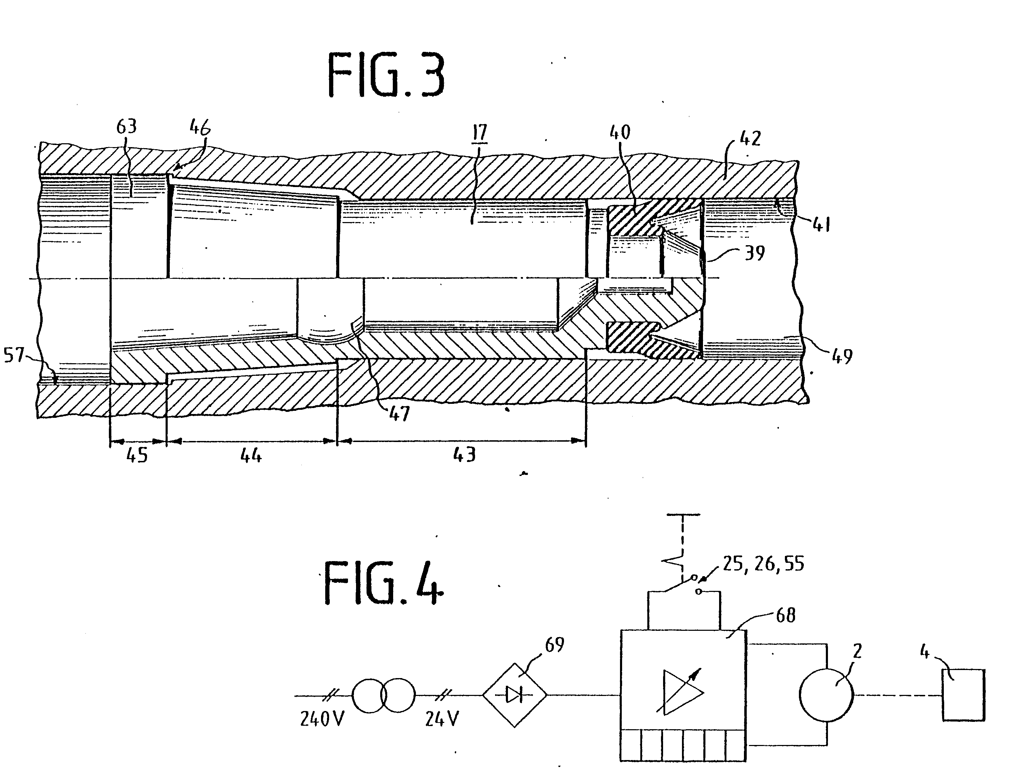

Der in Figur 3 in starker Vergrößerung näher dargestellte Kolben 17 ist an seiner Stirnseite 39 mit einer Ringdichtung 40 ausgestattet, die an der Innenwandung 41 des Pumpenzylinders 42 anliegt und ausschließlich der Abdichtung des Kolbens 17 gegenüber der Innenwandung 41 dient. Der zylindrische Führungsteil 43 weist einen Außendurchmesser auf, der demjenigen des Pumpenzylinders 42 entspricht. Der rückwärtige Teil des Kolbens 17 ist als Kolbenhemd 44 ausgebildet, während das Kolbenende als Anschlag 45 in der Kolben-Hub-Endstellung an der Stufe 46 des Pumpenzylinders 42 anliegt und als zusätzliches Führungsteil 63 an der Zylinderwand 57 geführt ist. In die Kalotte 47 ist das kugelförmige Ende 48 des Pleuels 18 eingeknöpft (siehe Figur 2), was infolge des vergleichsweise größeren Innendurchmessers des Kolbens 17 im Bereich des Kolbenhemds 44 leicht durchführbar ist. Mit 49 ist der Pumpenraum bezeichnet, der das Einlaßventil 50 und das Auslaßventil 51 enthält.

Die Vorrichtung arbeitet wie folgt :

Zum Spülen der Mundhöhle und insbesondere der Zahnzwischenräume und zur Massage des Zahnfleisches läßt sich das Handstück 15 vom Haltearm 12 abnehmen, da es auf diesem nur von einem Permanentmagneten 52 gehalten ist, der sich am Fußteil 53 des Handstücks 15 befindet und der mit einer Metallplatte 54 zusammenwirkt. Beim Verschieben des Schaltrings 26 in Längsrichtung des Handstücks 15 wird der Schalter 25, der als ein vom Magneten 55 beeinflußter Reed-Schalter ausgebildet ist, auf Stromdurchgang geschaltet so, daß der Motor 2 anläuft und den Kolben 17 über das Ritzel 21, das Zahnrad 20 mit Kurbelzapfen 19 und Pleuel 18 in eine hin- und hergehende Bewegung versetzt. Das Pumpenaggregat 4 pumpt nun die sich im Flüssigkeitsbehälter 6 befindliche Flüssigkeit über das Rückschlagventil 9 (das durch den ortsfesten Zapfen 56 aufgestoßen ist), die Schlauchleitung 10, das Einlaßventil 50, den Pumpenraum 49, das Auslaßventil 51 und die Schlauchleitung 27 zur Spritzdüse 58. Die Drehzahl des Pumpenaggregats 4 kann nun stufenlos durch Verstellen des Stellglieds 30 verändert werden, wodurch sich die Pulsfrequenz ändert.

Der Motor 2 ist ein DC-Motor und seine Drehzahl (4 400 U/min bis 9 600 U/min) wird über eine Pulsbreiten-Regelung verändert.

Das Pumpenaggregat 4 fördert bei Höchstdrehzahl etwa 450 ml/min und bei geringster Drehzahl etwa 250 ml/min. Die einzelnen Pulse des an der Spritzdüse 58 (etwa 0,9 mm Durchmesser) austretenden Wasserstrahls sind dabei zwischen 500 Pulsen/min und 1 100 Pulsen/min veränderbar. Die Aufprallkraft des Wasserstrahls beträgt etwa 15 p bis 80 p.

Zum Bürsten der Zähne wird die Zahnbürste 13 vom Adapter 16 abgenommen, wobei der Stromdurchgang von der Leiterplatte 5 über die Kontaktstifte 34, 35 zu den Batterien 36, 37 bzw. zur Schaltplatine 24 unterbrochen wird. Das Getriebe 59 bewegt den Borstenschaft 60 sowohl in Pfeilrichtung A-B (Hin- und Herbewegung) als auch in Pfeilrichtung D-D (Längsbewegung). Die Zahnbürste weist ein ringförmiges Schaltstück 61 auf, über das der Motor 62 ein- und ausschaltbar ist.

Auflistung der Einzelteile

1 Gehäuse
2 Elektromotor
3 Transformator
4 Pumpenaggregat
5 Leiterplatte
6 Flüssigkeitsbehälter
7 Oberseite des Gehäuses
8 Kupplungsteil
9 Rückschlagventil
10 Schlauchleitung
11 Seitenwand des Gehäuses
12 Haltearm
13 elektrische Zahnbürste
14 Seitenwand
15 Handstück
16 Adapter
17 Kolben
18 Pleuel
19 Kurbelzapfen
20 Zahnrad
21 Ritzel
22 Leitung
23 Leitung
24 Schaltplatine
25 Schalter
26 Schaltring
27 Schlauchleitung
28 Leitung
29 Leitung
30 Stellglied
31 Potentiometer
32 Leitung
33 Leitung
34 Kontaktstift
35 Kontaktstift
36 Batterie
37 Batterie
38 Leiterplatte
39 Stirnseite
40 Ringdichtung
41 Innenwandung
42 Pumpenzylinder
43 zylindrisches Führungsteil
44 Kolbenwand
45 Anschlag
46 Stufe
47 Kalotte
48 kugelförmiges Ende
49 Pumpenraum
50 Einlaßventil
51 Auslaßventil
52 Permanentmagnet
53 Fußteil
54 Metallplatte
55 Permanentmagnet
56 Zapfen
57 Zylinderwand
58 Spritzdüse
59 Getriebe
60 Borstensaft
61 Schaltstück
62 Motor
63 Führungsteil
64 Öffnung
65 Öffnung
66 Zunge
67 Zunge
68 Verstärker
69 Gleichrichter
71 Netzkabel
72 Zahnradachse

## Patentansprüche

1. Vorrichtung zum Pflegen und Reinigen der Zähne und des Zahnfleisches mit einem durch einen Motor (2) antreibbaren, einen Einlaß (50) und einen zu einer Spritzdüse (58) führenden Auslaß (51) aufweisenden Pumpenaggregat (4) und mit einem abnehmbaren Flüssigkeitsbehälter (6), dessen Innenraum mit dem Pumpeneinlaß (50) verbunden ist und mit einer Schlauchleitung (27), die das Pumpenaggregat (4) mit einem Handstück (15) der Spritzdüse (58) verbindet, wobei die Schlauchleitung (27) mit in die Schlauchwandung eingebetteten elektrischen Leiterdrähten (28, 29) ausgebildet ist und der Motor (2) des Pumpenaggregats (4), der mit dem Pumpenaggregat (4) in einem Gehäuse (1) untergebracht ist, mit einem handbetätigten Ein-/Ausschalter (25, 26, 55) schaltbar und der Ein-/Ausschalter (25, 26, 55) am Handstück (15) der Spritzdüse (58) angeordnet ist, wobei das Pumpenaggregat (4) einen Kolben (17) antreibt, dadurch gekennzeichnet, daß der Kolben (17) eine Ringdichtung (40), ein vorderes Geradführungsteil (43) und ein hinteres Geradführungsteil (63) aufweist, wobei das vordere Geradführungsteil (43) im Durchmesser kleiner ist als das hintere Geradführungsteil (63) und daß der Motor (2) des Pumpenaggregats (4) an einen elektronischen Regelkreis mit einstellbarem, selbsttätig regelnden Verstärkes angeschlossen ist.

2. Vorrichtung nach Anspruch 1, dadurch gekennzeichnet, daß das vordere Geradführungsteil (43) den Durchmesser des Pumpenzylinders aufweist, in dem die Ringdichtung (40) läuft.

3. Vorrichtung nach Anspruch 1 oder 2, dadurch gekennzeichnet, daß das vordere Geradführungsteil (43) und das hintere Geradführungsteil (63) über ein konisch verlaufendes Kolbenhemd (44) verbunden sind.

4. Vorrichtung nach einem der vorhergehenden Ansprüche, dadurch gekennzeichnet, daß die vordere Kante des hinteren Geradführungsteils (63) als Anschlag für die Hubbewegung des Kolbens (17) ausgebildet ist.

5. Vorrichtung nach einem der vorhergehenden Ansprüche, dadurch gekennzeichnet, daß der Kolben (17) über ein Pleuel (18) und ein Kugelgelenk (48, 44) antreibbar ist.

## Claims

1. A device for the care and cleaning of teeth and gums having a pump unit (4) which can be driven by a motor (2) and which comprises an inlet (50) and an outlet (51) leading to a spray nozzle (58) and having a removable liquid container (6), the interior of which is connected to the pump inlet (50), and having a flexible pipeline (27) which connects the pump unit (4) to a handle (15) of the spray nozzle (58), wherein the flexible pipeline (27) is provided with electrical conductor wires (28, 29) embedded in the pipe wall and the motor (2) of the pump unit (4), which with the pump unit (4) is accommodated in a housing (1), is controlled by a manually actuated on/off switch (25, 26, 55) and the on/off switch (25, 26, 55) is mounted on the handle (15) of the spray nozzle (58), wherein the pump unit (4) drives a piston (17), characterised in that the piston (17) comprises an annular seal (40), a front straight guide portion (43) and a rear straight guide portion (63), wherein the front straight guide portion (43) is smaller in diameter than the rear straight guide portion (63) and that the motor (2) of the pump unit (4) is connected to an electronic control circuit with an automatically adjustable controlled amplifier.

2. A device as claimed in claim 1, characterised in that the front straight guide portion (43) has the diameter of the pump cylinder in which the annular seal (40) runs.

3. A device as claimed in claim 1 or 2, characterised in that the front straight guide portion (43) and the rear straight guide portion (63) are connected through a conically extending piston skirt (44).

4. A device as claimed in one of the preceding claims, characterised in that the front edge of the rear straight guide portion (63) is constructed in the form of a stop for the stroke movement of the piston (17).

5. A device as claimed in one of the preceding claims, characterised in that the piston (17) is driven through a connecting rod (18) and a ball-and-socket joint (48, 44).

## Revendications

1. Dispositif pour le soin et le nettoyage des dents et des gencives, comportant un groupe de pompage (4) que peut entraîner un moteur (2) et qui présente une entrée (50) et une sortie (51) conduisant à une buse de pulvérisation (58) et comportant un réservoir de liquide amovible (6) dont l'espace intérieur est relié à l'entrée de la pompe (50) et comportant une conduite souple (27) qui relie le groupe de pompage (4) avec une poignée (15) de la buse de pulvérisation (58), étant précisé que la conduite souple (27) est conçue avec des conducteurs électriques (28, 29) incorporés dans la paroi de la conduite souple et étant précisé que le moteur (2) du groupe de pompage (4), qui est logé avec le groupe de pompage (4) dans un carter (1), peut être mis en circuit par un commutateur marche/arrêt (25, 26, 55) manœuvré à la main et étant précisé que l'interrupteur marche/arrêt (25, 26, 55) est disposé sur la poignée (15) de la buse de pulvérisation (58), le groupe de pompage (4) entraînant un piston (17), caractérisé en ce que le piston (17) présente une garniture d'étanchéité annulaire (40), une partie de guidage rectiligne avant (43), une partie de guidage rectiligne arrière (63), étant précisé que la partie de guidage rectiligne avant (43) a un diamètre inférieur à celui de la partie de guidage rectiligne arrière (63) ; et en ce que le moteur (2) du groupe de pompage (4) est relié à un circuit électronique de régulation comportant un amplificateur réglable autorégulateur.

2. Dispositif selon la revendication 1, caractérisé en ce que la partie de guidage rectiligne avant (43) présente le diamètre du cylindre de la pompe dans lequel court la garniture d'étanchéité annulaire (40).

3. Dispositif selon la revendication 1 ou 2, caractérisé en ce que la partie du guidage rectiligne avant (43) et la partie de guidage rectiligne arrière (63) sont reliées par une jupe de piston courant coniquement (44).

4. Dispositif selon une des revendications précédentes, caractérisé en ce que le bord avant de la partie de guidage rectiligne arrière (63) est conçu comme butée pour la course du piston (17).

5. Dispositif selon une des revendications précédentes, caractérisé en ce que le piston (17) peut être entraîné par l'intermédiaire d'une bielle (18) et d'un joint à rotule (48, 44).

FIG.1

FIG.2

# FIG. 3

0 085 795

# FIG. 4

240V    24V